# EUROPÄISCHE PATENTSCHRIFT

(11) **EP 3 125 383 B1**
(45) Veröffentlichungstag und Bekanntmachung des Hinweises auf die Patenterteilung: **30.10.2019**
(21) Anmeldenummer: 16181380.3
(22) Anmeldetag: 27.07.2016
(51) Int. Cl.: H02G 3/04, B29C 48/25

(54) **AUFKLAPPBARER WELLSCHLAUCH, KABELBAUM UND VERFAHREN ZUM HERSTELLEN EINES DERARTIGEN AUFKLAPPBAREN WELLSCHLAUCHS**
RINGED TUBULAR SHEATH, WIRE HARNESS, AND METHOD FOR PRODUCING SUCH A RINGED TUBULAR SHEATH
GAINE TUBULAIRE ANNELEE REPLIABLE, FAISCEAU DE CABLES ET PROCEDE DE PRODUCTION D'UNE TELLE TUBULAIRE ANNELEE REPLIABLE

(30) Priorität: 27.07.2015 DE 102015112231; 28.07.2015 DE 102015112272
(43) Veröffentlichungstag der Anmeldung: 01.02.2017
(73) Patentinhaber: SCHLEMMER GMBH, 85586 Poing (DE)
(72) Erfinder: CHU, Van Ngoc, 85586 Poing (DE)
(74) Vertreter: Horn Kleimann Waitzhofer Patentanwälte PartG mbB

(56) Entgegenhaltungen:
- EP-A2- 0 114 213
- EP-B2- 2 035 735
- DE-A1- 3 640 226
- FR-A1- 2 935 555
- JP-A- 2000 287 331
- JP-A- 2015 037 333
- US-B2- 6 938 645

## Beschreibung

Die vorliegende Erfindung betrifft einen aufklappbaren Wellschlauch zum Aufnehmen von Leitungen. Ferner betrifft die Erfindung ein Verfahren zum Herstellen eines derartigen aufklappbaren Wellschlauchs.

Wellschläuche oder Wellrohre können insbesondere im Automobilbau als Schutzrohre für Leitungen wie elektrische Kabel eingesetzt werden. Hierbei werden die Leitungen zur Montage in dem umfänglich geschlossenen Wellschlauch durch diesen hindurch gezogen oder geschoben. Um die Montage von Leitungen in derartigen Wellschläuchen zu erleichtern, können diese aufklappbar gestaltet werden.

Die EP 2 035 735 B2 beschreibt einen aufklappbaren Wellschlauch mit einer ersten Wellschlauchschale und einer zweiten Wellschlauchschale, die mit Hilfe eines Scharnierabschnitts verschwenkbar miteinander verbunden sind. Der Wellschlauch wird durch Extrudieren hergestellt, wobei nach dem Extrudieren aus einer der Wellschlauchschalen ein Segment herausgeschnitten wird.

Die US 6,938,645 B2 zeigt einen Wellschlauch mit zwei Wellschlauchschalen, die an einem Gelenkabschnitt verschwenkbar miteinander verbunden sind. An einem dem Gelenkabschnitt abgewandten Endabschnitt der Wellschlauchschalen ist jeweils ein Lippenabschnitt vorgesehen, der aus einem anderen Material gefertigt ist als die Wellschlauchschalen.

Vor diesem Hintergrund besteht die Aufgabe der vorliegenden Erfindung darin, einen verbesserten aufklappbaren Wellschlauch bereitzustellen.

Diese Aufgabe wird durch einen aufklappbaren Wellschlauch zum Aufnehmen von Leitungen gelöst. Der aufklappbare Wellschlauch umfasst eine erste Wellschlauchschale, eine zweite Wellschlauchschale, einen Gelenkabschnitt, an dem die erste Wellschlauchschale und die zweite Wellschlauchschale jeweils an einem ersten Endabschnitt verschwenkbar miteinander verbunden sind, einen Lippenabschnitt, der an einem zweiten Endabschnitt zumindest einer der Wellschlauchschalen vorgesehen ist, wobei der Lippenabschnitt aus einem anderen Material als die Wellschlauchschalen gefertigt ist, und eine Verrasteinrichtung zum Verrasten der ersten Wellschlauchschale mit der zweiten Wellschlauchschale beim Verbringen des Wellschlauchs von einem aufgeklappten Zustand in einen zusammengeklappten Zustand desselben.

Vorzugsweise sind der Lippenabschnitt und die Wellschlauchschalen aus unterschiedlichen Materialien, insbesondere unterschiedlichen Kunststoffmaterialien, gefertigt. Insbesondere sind der Lippenabschnitt und die Wellschlauchschalen aus unterschiedlichen thermoplastischen Kunststoffmaterialien gefertigt. Unter einem "anderen Material" ist vorliegend zu verstehen, dass der Lippenabschnitt aus einem Material gefertigt ist, das sich chemisch von dem Material unterscheidet, aus dem die Wellschlauchschalen gefertigt sind. Insbesondere weisen das Material, aus dem der Lippenabschnitt gefertigt ist und das Material, aus dem die Wellschlauchschalen gefertigt, sind unterschiedliche Werkstoffkennwerte, wie unterschiedliche Elastizitätsmoduln, unterschiedliche spezifische Dichten, unterschiedliche Schmelzpunkte oder dergleichen, auf. In einem zusammengeklappten Zustand des Wellschlauchs ist der Lippenabschnitt in einem Inneren des Wellschlauchs angeordnet und kann die Leitungen berühren. Dadurch, dass der Lippenabschnitt aus einem anderen Material als die Wellschlauchschalen gefertigt ist, wird verhindert, dass die Leitungen beim Montieren in dem Wellschlauch und im zusammengeklappten Zustand des Wellschlauchs durch einen Kontakt mit dem Lippenabschnitt beschädigt werden. Insbesondere sind die Leitungen aufgrund des für den Lippenabschnitt verwendeten Materials auch bei Vibrationen und Schwingungen durch den Lippenabschnitt vor Beschädigungen geschützt. Das Material, aus dem Lippenabschnitt gefertigt ist, ist vorzugsweise weicher als das Material, aus dem die Wellschlauchschalen gefertigt sind. Die unterschiedliche Weichheit resultiert dabei aus einer unterschiedlichen chemischen Zusammensetzung der Materialien. Der Wellschlauch kann auch als Wellrohr bezeichnet werden. Die Wellschlauchschalen bilden jeweils eine kreisbogenförmige Geometrie. Die Leitungen können beispielsweise elektrische Kabel oder Fluidleitungen sein. Mehrere derartige Leitungen können einen Kabelbaum bilden, der in dem Wellschlauch aufnehmbar ist. Der Kabelbaum kann auch den Wellschlauch umfassen. Der Wellschlauch ist insbesondere für den Automobilbereich geeignet. Die Wellschlauchschalen umfassen vorzugsweise eine umfängliche Öffnung, die jeweils einen Öffnungswinkel aufweist. Der Öffnungswinkel der ersten Wellschlauchschale ist dabei vorzugsweise gleich groß wie der Öffnungswinkel der zweiten Wellschlauchschale. Die Öffnungswinkel können auch unterschiedlich groß sein. Die Öffnungswinkel sind in einem aufgeklappten Zustand des Wellschlauchs jeweils als Winkel zwischen einer äußersten Kante der Lippenabschnitte und einer äußersten Kante des Gelenkabschnitts definiert.

Gemäß einer Ausführungsform ist sowohl an einem zweiten Endabschnitt der ersten Wellschlauchschale als auch an einem zweiten Endabschnitt der zweiten Wellschlauchschale jeweils ein Lippenabschnitt vorgesehen.

Der erste Endabschnitt und der zweite Endabschnitt der ersten Wellschlauchschale bzw. der erste Endabschnitt und der zweite Endabschnitt der zweiten Wellschlauchschale sind vorzugsweise einander gegenüberliegend angeordnet. Vorzugsweise wird der Wellschlauch durch Zweikomponentenextrusion hergestellt, wobei die Lippenabschnitte einteilig ausgebildet und während oder nach dem Extrudieren des Wellschlauchs in zwei voneinander getrennte Lippenabschnitte geteilt werden.

Gemäß einer weiteren Ausführungsform ist der Lippenabschnitt stoffschlüssig mit dem zweiten Endabschnitt verbunden.

Vorzugsweise ist der Lippenabschnitt der ersten Wellschlauchschale stoffschlüssig mit dem zweiten Endabschnitt der ersten Wellschlauchschale und der Lippenabschnitt der zweiten Wellschlauchschale ist stoffschlüssig mit dem zweiten Endabschnitt der zweiten Wellschlauchschale verbunden. Insbesondere ist der Lippenabschnitt an die Wellschlauchschalen anextrudiert.

Gemäß einer weiteren Ausführungsform ist der Gelenkabschnitt aus einem anderen Material als die Wellschlauchschalen gefertigt.

Die Wellschlauchschalen können beispielsweise aus einem Polyamid (PA), einem Polyethylen (PE), einem Polypropylen (PP), einem Polytetrafluorethylen (PTFE) oder einem Polyvinylchlorid (PVC) gefertigt sein. Vorzugsweise ist der Gelenkabschnitt aus einem weicheren Material als die Wellschlauchschalen gefertigt. Beispielsweise kann der Gelenkabschnitt aus einem thermoplastischen Elastomer (TPE) gefertigt sein.

Gemäß einer weiteren Ausführungsform sind der Gelenkabschnitt und der Lippenabschnitt aus demselben Material, insbesondere aus einem thermoplastischen Elastomer, gefertigt.

Beispielsweise können der Gelenkabschnitt und der Lippenabschnitt aus einem thermoplastischen Polyurethan (TPU) gefertigt sein. Hierdurch ergeben sich besonders gute Verformungseigenschaften für den Gelenkabschnitt und den Lippenabschnitt. Dadurch wird eine Beschädigung des Gelenkabschnitts beim Aufklappen und Zusammenklappen des Wellschlauchs verhindert, wodurch der aufklappbare Wellschlauch beliebig oft aufklappbar und zusammenklappbar ist. Dadurch, dass der Lippenabschnitt aus einem TPU gefertigt ist, ist dieser besonders weich und flexibel.

Gemäß einer weiteren Ausführungsform ist der Gelenkabschnitt stoffschlüssig mit der ersten Wellschlauchschale und der zweiten Wellschlauchschale verbunden.

Der Gelenkabschnitt ist insbesondere ein Filmscharnier. Insbesondere ist der Gelenkabschnitt an die erste Wellschlauchschale und die zweite Wellschlauchschale anextrudiert. Alternativ kann der Gelenkabschnitt nicht als glattes Filmscharnier ausgebildet sein, sondern Rippen aufweisen, die abwechselnd mit Rippentälern vorgesehen sind. Die Rippen erstrecken sich im zusammengeklappten Zustand des Wellschlauchs vorzugsweise weg von einem Inneren desselben. Vorzugsweise sind die Rippen gleichmäßig voneinander beabstandet angeordnet.

Gemäß einer weiteren Ausführungsform ist die erste Wellschlauchschale in einem zusammengeklappten Zustand des aufklappbaren Wellschlauchs zumindest abschnittsweise innerhalb der zweiten Wellschlauchschale angeordnet.

Hierbei überdecken sich die erste Wellschlauchschale und die zweite Wellschlauchschale mit einem Überdeckungswinkel. Der Überdeckungswinkel ist als Winkel zwischen äußersten Kanten der Lippenabschnitte der Wellschlauchschalen definiert. Der Überdeckungswinkel beträgt beispielsweise 40 bis 190°, bevorzugt 50 bis 180°, weiter bevorzugt 60 bis 170°. Insbesondere kann der Überdeckungswinkel auch kleiner als 150°, beispielsweise 70°, 80°, 90°, 100°, 110°, 120°, 130° oder 140°, sein. Der Überdeckungswinkel kann beispielweise auch 70° ± 10°, 80° ± 10°, 90° ± 10°, 100° ± 10°, 110° ± 10°, 120° ± 10°, 130° ± 10° oder 140° ± 10°, sein. Der Überdeckungswinkel kann alternativ auch größer als 150°, beispielsweise 155°, 160°, 165°, 170°, 175° oder 180° sein. Der Überdeckungswinkel kann beispielweise 155° ± 10°, 160° ± 10°, 165°± 10°, 170° ± 10°, 175° ± 10° oder 180° ± 10°, sein. In einer besonders bevorzugten Ausführungsform des Wellschlauchs ist der Überdeckungswinkel größer gleich 160°, beispielsweise 160 bis 170°. Dadurch, dass sich die Wellschlauchschalen überdecken, wird ein ungewolltes Aufklappen des Wellschlauchs verhindert.

Gemäß einer weiteren Ausführungsform ist ein Durchmesser der ersten Wellschlauchschale kleiner als ein Durchmesser der zweiten Wellschlauchschale.

Hierdurch wird verhindert, dass die erste Wellschlauchschale und/oder die zweite Wellschlauchschale in dem zusammengeklappten Zustand unter einer Vorspannung sind. Dadurch wird eine Beschädigung der Wellschlauchschalen verhindert, wodurch sich die Lebensdauer des Wellschlauchs erhöht. Die erste Wellschlauchschale umfasst vorzugsweise eine Vielzahl an Wellen oder Rippen, die zumindest abschnittsweise um die erste Wellschlauchschale umlaufen. Analog hierzu umfasst auch die zweite Wellschlauchschale vorzugsweise eine Vielzahl an Wellen oder Rippen, die zumindest abschnittsweise um die zweite Wellschlauchschale umlaufen. Zwischen zwei Rippen ist insbesondere jeweils ein Wellental oder Rippental vorgesehen. Die erste Wellschlauchschale weist in den Rippentälern vorzugsweise jeweils einen Innendurchmesser und einen Außendurchmesser auf, wobei der Außendurchmesser um eine Materialdicke der ersten Wellschlauchschale größer als der Innendurchmesser ist. Die Materialdicke kann beispielsweise 0,1 bis 0,5 mm betragen. Die erste Wellschlauchschale weist an den Rippen insbesondere ebenfalls jeweils einen Innendurchmesser und einen Außendurchmesser auf, wobei der Außendurchmesser um die Materialdicke der ersten Wellschlauchschale größer als der Innendurchmesser ist.

Analog hierzu weist die zweite Wellschlauchschale in den Rippentälern vorzugsweise jeweils einen Innendurchmesser und einen Außendurchmesser auf, wobei der Außendurchmesser um eine Materialdicke der zweiten Wellschlauchschale größer ist als der Innendurchmesser. Die zweite Wellschlauchschale weist an den Rippen insbesondere jeweils einen Innendurchmesser und einen Außendurchmesser auf, wobei der Außendurchmesser um die Materialdicke des zweiten Wellschlauchabschnitts größer als der Innendurchmesser ist. Vorzugsweise sind die Durchmesser der ersten Wellschlauchschale jeweils kleiner als die korrespondierenden Durchmesser der zweiten Wellschlauchschale. Insbesondere heißt das, dass beispielsweise der Außendurchmesser der ersten Wellschlauchschale an den Rippen kleiner ist als sein korrespondierender Außendurchmesser der zweiten Wellschlauchschale an deren Rippen.

Beim Verbringen des Wellschlauchs von dem aufgeklappten Zustand in den zusammengeklappten Zustand wird die erste Wellschlauchschale insbesondere zumindest abschnittsweise in der zweiten Wellschlauchschale aufgenommen, so dass die Rippen der ersten Wellschlauchschale in den Rippen der zweiten Wellschlauchschale zum Liegen kommen. Hierbei ist es vorteilhaft, dass der Außendurchmesser der ersten Wellschlauchschale an den Rippen dem Innendurchmesser der zweiten Wellschlauchschale an den Rippen und/oder der Außendurchmesser der ersten Wellschlauchschale an den Rippentälern dem Innendurchmesser der zweiten Wellschlauchschale an den Rippentälern entspricht oder jeweils nur geringfügig größer oder kleiner als dieser ist. Hierdurch wird erreicht, dass die erste Wellschlauchschale und/oder die zweite Wellschlauchschale in dem zusammengeklappten Zustand des Wellschlauchs vorspannungsfrei oder zumindest nur gering vorgespannt sind. Insbesondere unterscheidet sich der Durchmesser der ersten Wellschlauchschale so von dem Durchmesser der zweiten Wellschlauchschale, dass die erste Wellschlauchschale in dem zusammengeklappten Zustand des Wellschlauchs spannungsfrei in der zweiten Wellschlauchschale aufgenommen ist. Hierdurch wird beim Zusammenklappen des Wellschlauchs und/oder im zusammengeklappten Zustand desselben eine übermäßige mechanische Belastung der Wellschlauchschalen verhindert. Dadurch sind diese besonders langlebig und vor Beschädigungen geschützt.

Gemäß einer weiteren Ausführungsform ist der Durchmesser der ersten Wellschlauchschale um 5 bis 15 %, bevorzugt um 6 bis 14 %, weiter bevorzugt um 7 bis 13 %, weiter bevorzugt um 8 bis 12 %, weiter bevorzugt um 9 bis 11 %, weiter bevorzugt um 10 % kleiner als der Durchmesser der zweiten Wellschlauchschale.

Beispielsweise weist der Außendurchmesser der ersten Wellschlauchschale an den Rippen einen Wert von 20 mm und der Außendurchmesser der zweiten Wellschlauchschale an den Rippen einen Wert von 21,2 mm auf.

Gemäß einer weiteren Ausführungsform sind beim Verbringen des Wellschlauchs von einem aufgeklappten Zustand in einen zusammengeklappten Zustand desselben die erste Wellschlauchschale und/oder die zweite Wellschlauchschale federelastisch verformbar.

Vorzugsweise weisen die Wellschlauchschalen die zuvor schon erwähnten umfänglichen Öffnungen auf. Beim Verbringen des Wellschlauchs von dem aufgeklappten Zustand in den zusammengeklappten Zustand wird die Öffnung der ersten Wellschlauchschale zusammengedrückt und die Öffnung der zweiten Wellschlauchschale aufgeweitet. Dabei gleitet die erste Wellschlauchschale in die zweite Wellschlauchschale hinein.

Der Wellschlauch umfasst eine Verrasteinrichtung zum Verrasten der ersten Wellschlauchschale mit der zweiten Wellschlauchschale beim Verbringen des Wellschlauchs von einem aufgeklappten Zustand in einen zusammengeklappten Zustand desselben.

Hierdurch wird ein ungewolltes Öffnen oder Aufklappen des Wellschlauchs verhindert. Dies verbessert die Betriebszuverlässigkeit des Wellschlauchs. Die Verrasteinrichtung ist vorzugsweise wieder lösbar, so dass der Wellschlauch nach dem Verrasten wieder aufklappbar ist.

Gemäß einer weiteren Ausführungsform weisen die erste Wellschlauchschale und die zweite Wellschlauchschale jeweils umlaufende Rippen auf, wobei die Verrasteinrichtung an den Rippen der ersten Wellschlauchschale vorgesehene Rastnasen und an den Rippen der zweiten Wellschlauchschale vorgesehene Rasthaken umfasst, wobei die Rastnasen dazu eingerichtet sind, formschlüssig in die Rasthaken einzugreifen und/oder wobei die Rastnasen dazu eingerichtet sind, in einer radialen Richtung des aufklappbaren Wellschlauchs formschlüssig in die Rasthaken einzugreifen.

Beispielsweise weisen die Rippen der ersten Wellschlauchschale zwei einander gegenüberliegend angeordnete zumindest abschnittsweise um den Wellschlauch umlaufende Rastnasen und die Rippen der zweiten Wellschlauchschale zwei einander gegenüberliegend angeordnete zumindest abschnittsweise um den Wellschlauch umlaufende Rasthaken auf. Beim Verrasten der Rastnasen mit den Rasthaken werden die Rastnasen und/oder die Rasthaken federelastisch verformt. Die Rippen der ersten Wellschlauchschale verjüngen sich vorzugsweise in Richtung des zweiten Endabschnitts der ersten Wellschlauchschale. Die radiale Richtung des Wellschlauchs ist in dem zusammengeklappten Zustand des Wellschlauchs von einer Mittelachse desselben radial nach außen orientiert. In dem zusammengeklappten Zustand des Wellschlauchs können Mittelachsen der Wellschlauchschalen und des Wellschlauchs aufeinander angeordnet sein.

Ferner wird ein Kabelbaum für den Automobilbereich mit einem oder mehreren elektrischen Kabeln und einem derartigen aufklappbaren Wellschlauch vorgeschlagen, wobei das eine oder die mehreren elektrischen Kabel über eine Länge des aufklappbaren Wellschlauchs in diesem geführt sind.

Der Kabelbaum kann auch in dem Wellschlauch geführte Fluidleitungen umfassen.

Weiterhin wird ein Verfahren zum Herstellen eines derartigen Wellschlauchs vorgeschlagen, wobei der aufklappbare Wellschlauch durch Zweikomponentenextrusion hergestellt wird und wobei die erste Wellschlauchschale sowie die zweite Wellschlauchschale mit einer ersten Komponente und der Gelenkabschnitt sowie der Lippenabschnitt mit einer zweiten Komponente extrudiert werden, wobei der aufklappbare Wellschlauch eine Verrasteinrichtung zum Verrasten der ersten Wellschlauchschale mit der zweiten Wellschlauchschale beim Verbringen des Wellschlauchs von einem aufgeklappten Zustand desselben aufweist. Die erste Komponente ist beispielsweise ein PA, PE, PP, PTFE oder PVC, die zweite Komponente kann ein TPE sein. Die erste Komponente kann auch als harte Komponente und die zweite Komponente kann auch als weiche Komponente bezeichnet werden. Vorzugsweise wird der Wellschlauch unmittelbar nach dem Extrudieren einem Korrugator zugeführt, der die Rippen an die Wellschlauchschalen anformt. Optional kann auch eine dritte oder vierte Komponente vorgesehen sein, so dass die Wellschlauchschalen und/oder der Gelenkabschnitt und die Lippenabschnitte aus unterschiedlichen Werkstoffen gefertigt werden können.

Gemäß einer Ausführungsform wird der Lippenabschnitt nach oder bei dem Extrudieren in einer Längsrichtung des aufklappbaren Wellschlauchs geteilt.

Vorzugsweise wird der Lippenabschnitt mit Hilfe einer Schneideinrichtung mittig in zwei Lippenabschnitte aufgeteilt. Dadurch, dass beim Herstellen des Wellschlauchs aus keiner der Wellschlauchschalen ein Segment herausgeschnitten wird, ist das Verfahren besonders materialsparend und damit kostengünstig.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische perspektivische Ansicht einer Ausführungsform eines aufklappbaren Wellschlauchs in einem aufgeklappten Zustand;
Fig. 2 zeigt eine weitere schematische perspektivische Ansicht des aufklappbaren Wellschlauchs gemäß Fig. 1 in einem zusammengeklappten Zustand;
Fig. 3 zeigt eine schematische Vorderansicht des aufklappbaren Wellschlauchs gemäß Fig. 1;
Fig. 4 zeigt eine schematische Schnittansicht des Wellschlauchs gemäß der Schnittlinie IV-IV der Fig. 3;
Fig. 5 zeigt eine weitere schematische Vorderansicht des Wellschlauchs gemäß Fig. 1;
Fig. 6 zeigt eine schematische Schnittansicht des Wellschlauchs gemäß der Schnittlinie VI-VI der Fig. 5;
Fig. 7 zeigt ein schematisches Blockdiagramm einer Ausführungsform eines Verfahrens zum Herstellen des Wellschlauchs gemäß Fig. 1;
Fig. 8 zeigt eine schematische Schnittansicht einer Ausführungsform eines Spritzkopfs zum Durchführen des Verfahrens gemäß Fig. 7;
Fig. 9 zeigt eine weitere schematische perspektivische Ansicht des Wellschlauchs gemäß Fig. 1;
Fig. 10 zeigt eine schematische Seitenansicht des Wellschlauchs gemäß Fig. 1;
Fig. 11 zeigt eine weitere schematische Vorderansicht des Wellschlauchs gemäß Fig. 1;
Fig. 12 zeigt eine weitere schematische Seitenansicht des Wellschlauchs gemäß Fig. 1; und
Fig. 13 zeigt eine schematische perspektivische Ansicht einer weiteren Ausführungsform eines Wellschlauchs.

In den Figuren sind gleiche oder funktionsgleiche Elemente mit denselben Bezugszeichen versehen worden, sofern nichts anderes angegeben ist.

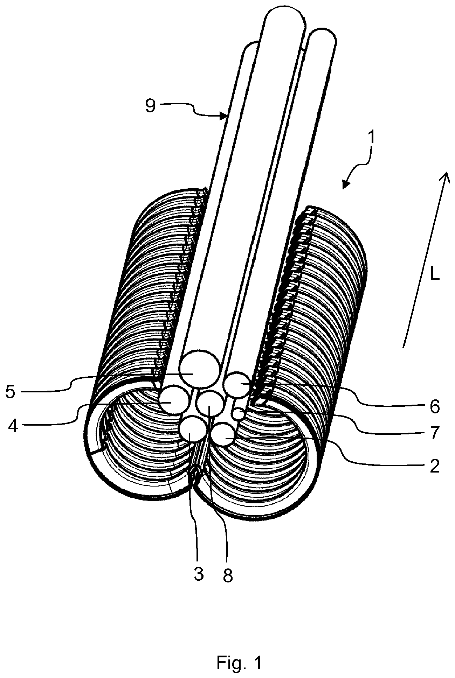

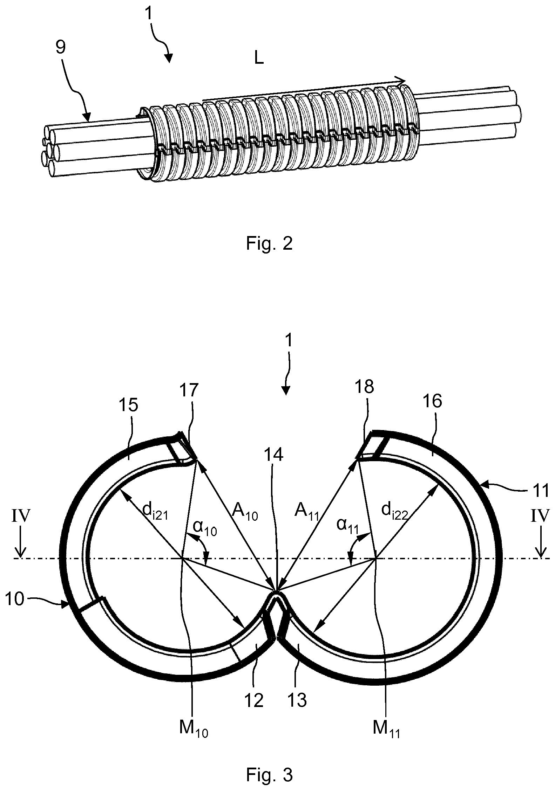

Die Fig. 1 zeigt eine schematische perspektivische Ansicht eines klappbaren, zusammenklappbaren oder aufklappbaren Wellschlauchs 1 in einem aufgeklappten Zustand. Die Fig. 2 zeigt eine schematische perspektivische Ansicht des Wellschlauchs 1 in einem zusammengeklappten Zustand. Der Wellschlauch 1 kann auch als Wellrohr bezeichnet werden. Der Wellschlauch 1 ist insbesondere für einen Einsatz im Automobilbereich geeignet. Der Wellschlauch 1 kann auch in beliebigen anderen Fahrzeugen oder in immobilen Anwendungen eingesetzt werden.

Der Wellschlauch 1 ist dazu eingerichtet, Leitungen 2 bis 8 aufzunehmen. Die Anzahl der Leitungen 2 bis 8 ist beliebig. Die Leitungen 2 bis 8 können einen Kabelbaum 9 bilden. Der Kabelbaum 9 kann auch den Wellschlauch 1 umfassen. Beispielsweise kann der Kabelbaum 9, wie in den Fig. 1 und 2 gezeigt, sieben Leitungen 2 bis 8 aufnehmen. Die Leitungen 2 bis 8 können beispielsweise elektrische Kabel oder Fluidleitungen sein. Der Wellschlauch 1 weist eine Längsrichtung L auf.

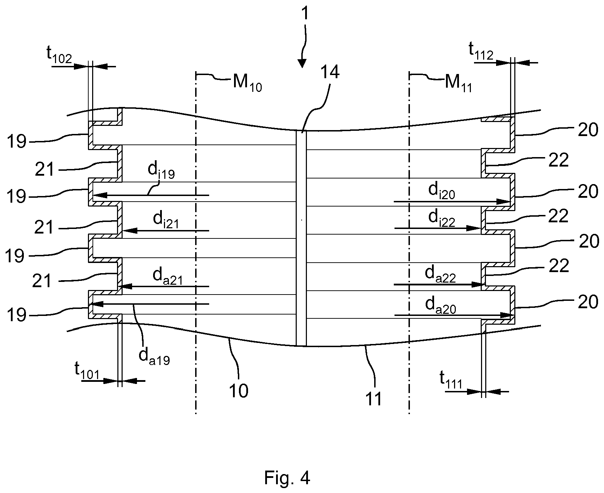

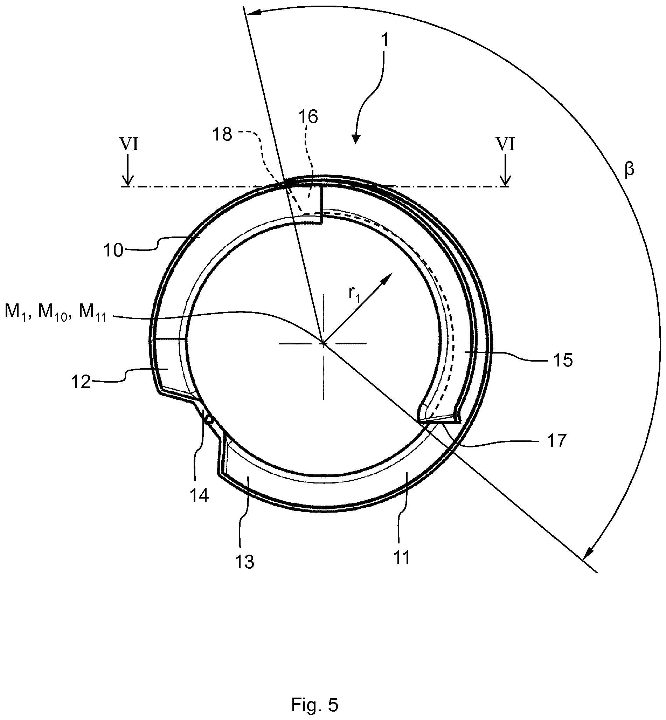

Die Fig. 3 zeigt eine schematische Vorderansicht des Wellschlauchs 1 in dem aufgeklappten Zustand ohne den Kabelbaum 9. Die Fig. 4 zeigt eine schematische Schnittansicht des Wellschlauchs 1 gemäß der Schnittlinie IV-IV der Fig. 3. Die Fig. 5 zeigt eine schematische Vorderansicht des Wellschlauchs 1 in dem zusammengeklappten Zustand. Im Folgenden wird auf die Fig. 3 bis 5 gleichzeitig Bezug genommen.

Der Wellschlauch 1 umfasst eine erste Wellschlauchschale 10 und eine zweite Wellschlauchschale 11. Die Wellschlauchschalen 10, 11 sind bogenförmig, insbesondere kreisbogenförmig, gekrümmt und können im Querschnitt jeweils beispielsweise die Form eines Zweidrittelkreises aufweisen. Die Wellschlauchschalen 10, 11 sind rohrförmig mit einer seitlichen Schlitzung. Die Wellschlauchschalen 10, 11 weisen jeweils eine Mittelachse M₁₀, M₁₁ auf. Die Wellschlauchschalen 10, 11 können auch als Wellschlauchabschnitte bezeichnet werden.

Die erste Wellschlauchschale 10 und die zweite Wellschlauchschale 11 sind jeweils an einem ersten Endabschnitt 12, 13 mit Hilfe eines Gelenkabschnitts 14 verschwenkbar miteinander verbunden. Der Gelenkabschnitt 14 ist vorzugsweise als Filmscharnier ausgebildet. Der Gelenkabschnitt 14 ist stoffschlüssig mit der ersten Wellschlauchschale 10 und der zweiten Wellschlauchschale 11 verbunden. Der Gelenkabschnitt 14 ist aus einem anderen Material als die Wellschlauchschalen 10, 11 gefertigt. Beispielsweise sind die Wellschlauchschalen 10, 11 aus PA, PE, PP, PTFE oder PVC gefertigt. Der Gelenkabschnitt 14 ist vorzugsweise aus einem TPE, wie beispielsweise einem TPU, gefertigt. Insbesondere ist der Gelenkabschnitt 14 an die Wellschlauchschalen 10, 11 anextrudiert.

An einem dem ersten Endabschnitt 12, 13 jeweils gegenüberliegenden zweiten Endabschnitt 15, 16 der Wellschlauchschalen 10, 11 ist jeweils ein Lippenabschnitt 17, 18 vorgesehen. Die Lippenabschnitte 17, 18 sind aus einem anderen Material als die Wellschlauchschalen 10, 11 gefertigt. Vorzugsweise ist sowohl an dem zweiten Endabschnitt 15 der ersten Wellschlauchschale 10 als auch an dem zweiten Endabschnitt 16 der zweiten Wellschlauchschale 11 jeweils ein derartiger Lippenabschnitt 17, 18 vorgesehen. Die Lippenabschnitte 17, 18 sind stoffschlüssig mit den zweiten Endabschnitten 15, 16 verbunden. Der Gelenkabschnitt 14 und die Lippenabschnitte 17, 18 sind vorzugsweise aus demselben Material gefertigt. Die Lippenabschnitte 17, 18 sind aus einem weicheren Material gefertigt als die Wellschlauchschalen 10, 11. Vorzugsweise sind die Lippenabschnitte 17, 18 an die Wellschlauchschalen 10, 11 anextrudiert. Dadurch, dass die Lippenabschnitte 17, 18 aus einem weicheren Material gefertigt sind als die Wellschlauchschalen 10, 11 kann eine Beschädigung des Kabelbaums 9 beim Einbringen desselben in den aufgeklappten Wellschlauch 1 verhindert werden. In dem zusammengeklappten Zustand des Wellschlauchs 1 ist der Lippenabschnitt 17 im Inneren des Wellschlauchs 1 angeordnet. Aufgrund der Weichheit des Materials des Lippenabschnitts 17 kann auch bei Schwingungen und Vibrationen, das heißt, im Betrieb des Wellschlauchs 1, eine Beschädigung des Kabelbaums 9 durch einen Kontakt mit dem Lippenabschnitt 17 ausgeschlossen werden. Dies erhöht die Betriebszuverlässigkeit und die Lebensdauer des Kabelbaums 9.

Die erste Wellschlauchschale 10 umfasst eine Vielzahl an Wellen oder Rippen 19, die zumindest abschnittsweise um die erste Wellschlauchschale 10 umlaufen. Analog hierzu umfasst die zweite Wellschlauchschale 11 eine Vielzahl an Wellen oder Rippen 20, die zumindest abschnittsweise um die zweite Wellschlauchschale 11 umlaufen. Die Rippen 19, 20 sind in Längsrichtung L gleichmäßig voneinander beabstandet angeordnet. Zwischen zwei Rippen 19 ist jeweils ein Wellental oder Rippental 21 und zwischen zwei Rippen 20 ist jeweils ein Wellental oder Rippental 22 vorgesehen. Die erste Wellschlauchschale 10 weist in den Rippentälern 21 jeweils einen Innendurchmesser dᵢ₂₁ und einen Außendurchmesser dₐ₂₁ auf, wobei der Außendurchmesser dₐ₂₁ um eine Materialdicke t₁₀₁ größer ist als der Innendurchmesser dᵢ₂₁. Die Materialdicke t₁₀₁ kann beispielsweise 0,1 bis 0,7 mm betragen. Die erste Wellschlauchschale10 weist an den Rippen 19 jeweils einen Innendurchmesser dᵢ₁₉ und einen Außendurchmesser dₐ₁₉ auf, wobei der Außendurchmesser dₐ₁₉ um eine Materialdicke t₁₀₂ größer als der Innendurchmesser dᵢ₁₉ ist. Die Materialdicke t₁₀₂ kann beispielsweise 0,1 bis 0,7 mm betragen. Vorzugsweise ist die Materialdicke t₁₀₁ größer als die Materialdicke t₁₀₂.

Analog hierzu weist die zweite Wellschlauchschale 11 in den Rippentälern 22 jeweils einen Innendurchmesser dᵢ₂₂ und einen Außendurchmesser dₐ₂₂ auf, wobei der Außendurchmesser dₐ₂₂ um eine Materialdicke t₁₁₁ größer als der Innendurchmesser dᵢ₂₂ ist. Die Materialdicke t₁₁₁ kann der Materialdicke t₁₀₁ entsprechen. Die zweite Wellschlauchschale 11 weist an den Rippen 20 ferner jeweils einen Innendurchmesser dᵢ₂₀ und einen Außendurchmesser dₐ₂₀ auf, wobei der Außendurchmesser dₐ₂₀ um eine Materialdicke t₁₁₂ größer als der Innendurchmesser dᵢ₂₀ ist. Die Materialdicke t₁₁₂ kann der Materialdicke t₁₀₂ entsprechen. Vorzugsweise sind die Durchmesser dₐ₁₉, dᵢ₁₉, dₐ₂₁ bzw. dᵢ₂₁ der ersten Wellschlauchschale 10 jeweils kleiner als die korrespondierenden Durchmesser dₐ₂₀, dᵢ₂₀, dₐ₂₂ bzw. dᵢ₂₂ der zweiten Wellschlauchschale 11. Insbesondere heißt das, dass der Außendurchmesser dₐ₁₉ der ersten Wellschlauchschale 10 kleiner ist als sein korrespondierender Außendurchmesser dₐ₂₀ der zweiten Wellschlauchschale 11. Beispielsweise kann der Außendurchmesser dₐ₁₉ der ersten Wellschlauchschale 10 um 5 bis 15 %, bevorzugt um 6 bis 14 %, weiter bevorzugt um 7 bis 13 %, weiter bevorzugt um 8 bis 12 %, weiter bevorzugt um 9 bis 11 %, weiter bevorzugt um 10 % kleiner als der Außendurchmesser dₐ₂₀ der zweiten Wellschlauchschale 11 sein. Gleiches gilt für die Durchmesser dᵢ₁₉, dₐ₂₁ bzw. dᵢ₂₁ und ihre korrespondierenden Durchmesser dᵢ₂₀, dₐ₂₂ bzw. dᵢ₂₂. Beispielsweise weist der Außendurchmesser dₐ₁₉ einen Wert von 20 mm und der Außendurchmesser dₐ₂₀ einen Wert von 21,2 mm auf.

Beim Verbringen des Wellschlauchs 1 von dem aufgeklappten Zustand in den zusammengeklappten Zustand wird die erste Wellschlauchschale 10 in der zweiten Wellschlauchschale 11 aufgenommen, so dass die Rippen 19 in den Rippen 20 zum Liegen kommen. Hierbei ist es vorteilhaft, dass der Außendurchmesser dₐ₁₉ dem Innendurchmesser dᵢ₂₀ und der Außendurchmesser dₐ₂₁ dem Innendurchmesser dᵢ₂₂ entspricht oder jeweils nur geringfügig größer oder kleiner als dieser ist. Hierdurch wird erreicht, dass die erste Wellschlauchschale 10 und/oder die zweite Wellschlauchschale 11 in dem zusammengeklappten Zustand des Wellschlauchs 1 vorspannungsfrei oder zumindest nur gering vorgespannt sind. Hierdurch wird beim Zusammenklappen des Wellschlauchs 1 und/oder im zusammengeklappten Zustand desselben eine übermäßige mechanische Belastung der Wellschlauchschalen 10, 11 verhindert. Hierdurch sind diese besonders langlebig und vor Beschädigungen geschützt.

Die Wellschlauchschalen 10, 11 umfassen jeweils einen Öffnungswinkel α₁₀, α₁₁. Der Öffnungswinkel α₁₀ der ersten Wellschlauchschale 10 ist dabei gleich groß wie der Öffnungswinkel α₁₁ der zweiten Wellschlauchschale 11. Die Öffnungswinkel a₁₀, α₁₀ können sich in ihrer Größe auch geringfügig voneinander unterscheiden. Beispielsweise weisen die Öffnungswinkel a₁₀, α₁₁ jeweils einen Wert zwischen 95 und 110° auf. Die Öffnungswinkel a₁₀, α₁₁ sind jeweils als Winkel zwischen einer äußersten Kante der Lippenabschnitte 17, 18 und einer äußersten Kante des Gelenkabschnitts 14 definiert. Die erste Wellschlauchschale 10 weist ferner eine Öffnung A₁₀ auf, die kleiner ist als der Innendurchmesser dᵢ₂₁. Die zweite Wellschlauchschale 11 weist eine Öffnung A₁₁ auf, die kleiner als der Innendurchmesser dᵢ₂₂ ist. Da die Wellschlauchschalen 10, 11 unterschiedliche Durchmesser dᵢ₂₁, dᵢ₂₂ aber gleiche Öffnungswinkel a₁₀, α₁₁ aufweisen, ist die Öffnung A₁₁ zumindest geringfügig größer als die Öffnung A₁₀. Die Öffnungen A₁₀, A₁₁ können auch gleich groß sein.

Beim Verbringen des Wellschlauchs 1 von dem in den Fig. 1, 3 und 4 gezeigten aufgeklappten Zustand in den in den Fig. 2 und 5 gezeigten zusammengeklappten Zustand wird die erste Wellschlauchschale 10 zumindest teilweise in der zweiten Wellschlauchschale 11 aufgenommen. Beim Zusammenklappen des Wellschlauchs 1 wird die Öffnung A₁₁ aufgeweitet und die Öffnung A₁₀ gestaucht. Hierbei verformen sich die erste Wellschlauchschale 10 und/oder die zweite Wellschlauchschale 11 federelastisch. Wie die Fig. 5 zeigt, überdecken sich die erste Wellschlauchschale 10 und die zweite Wellschlauchschale 11 mit einem Überdeckungswinkel β, der als Winkel zwischen äußersten Kanten der Lippenabschnitte 17, 18 definiert ist. Der Überdeckungswinkel β beträgt beispielsweise 40 bis 190°, bevorzugt 50 bis 180°, weiter bevorzugt 60 bis 170°. Insbesondere kann der Überdeckungswinkel auch kleiner als 150°, beispielsweise 70°, 80°, 90°, 100°, 110°, 120°, 130° oder 140°, sein. Der Überdeckungswinkel β kann 70° ± 10°, 80° ± 10°, 90° ± 10°, 100° ± 10°, 110° ± 10°, 120° ± 10°, 130° ± 10° oder 140° ± 10°, sein. Der Überdeckungswinkel β kann alternativ auch größer als 150°, beispielsweise 155°, 160°, 165°, 170°, 175° oder 180°, sein. Der Überdeckungswinkel β kann beispielweise 155° ± 10°, 160° ± 10°, 165°± 10°, 170° ± 10°, 175° ± 10° oder 180° ± 10° sein. In einer besonders bevorzugten Ausführungsform des Wellschlauchs 1 ist der Überdeckungswinkel β größer gleich 160°, beispielsweise 160 bis 170°.

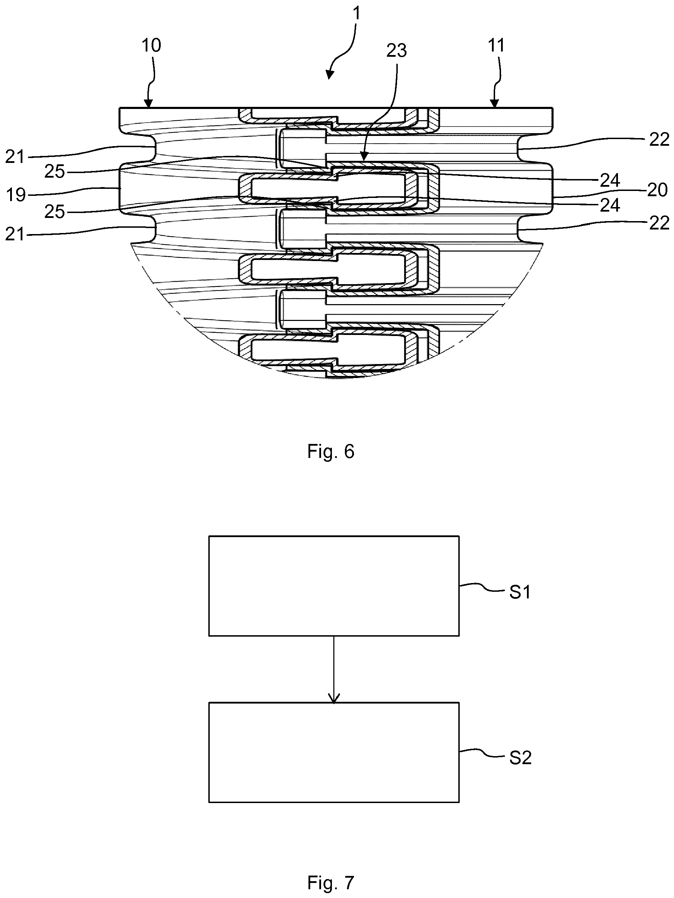

Die Fig. 6 zeigt eine Schnittansicht des Wellschlauchs 1 gemäß der Schnittlinie VI-VI der Fig. 5. Der Wellschlauch 1 umfasst ferner eine Verrasteinrichtung 23 zum Verrasten der ersten Wellschlauchschale 10 mit der zweiten Wellschlauchschale 11 beim Verbringen des Wellschlauchs 1 von dem aufgeklappten Zustand in den zusammengeklappten Zustand. Die erste Wellschlauchschale 10 und die zweite Wellschlauchschale 11 weisen jeweils die umlaufenden Rippen 19, 20 auf, die in dem zusammengeklappten Zustand des Wellschlauchs 1 ineinander greifen. Wie die Fig. 6 zeigt, verjüngen sich die Rippen 19 in Richtung des zweiten Endabschnitts 15 der ersten Wellschlauchschale 10. Die Verrasteinrichtung 23 weist an den Rippen 19 der ersten Wellschlauchschale 10 vorgesehene Rastnasen 24 und an den Rippen 20 der zweiten Wellschlauchschale 11 vorgesehene Rasthaken 25 auf, wobei die Rastnasen 24 dazu eingerichtet sind, formschlüssig in die Rasthaken 25 einzugreifen.

Jeder Rippe 19 können dabei zwei einander gegenüberliegende Rastnasen 24 zugeordnet sein und jeder Rippe 20 können zwei einander gegenüberliegend angeordnete Rasthaken 25 zugeordnet sein. Die Rastnasen 24 und die Rasthaken 25 können zumindest teilweise um den Wellschlauch 1 umlaufen. Beim Verrasten der Rastnasen 24 mit den Rasthaken 25 werden die Rastnasen 24 und/oder die Rasthaken 25 federelastisch verformt. Die Rastnasen 24 sind dazu eingerichtet, in einer radialen Richtung r₁ (Fig. 5), das heißt von einer Mittelachse M₁ radial nach außen, des Wellschlauchs 1 formschlüssig in die Rasthaken 25 einzugreifen. Mit Hilfe der Verrasteinrichtung 23 kann ein ungewolltes Aufklappen oder Öffnen des Wellschlauchs 1 zuverlässig verhindert werden.

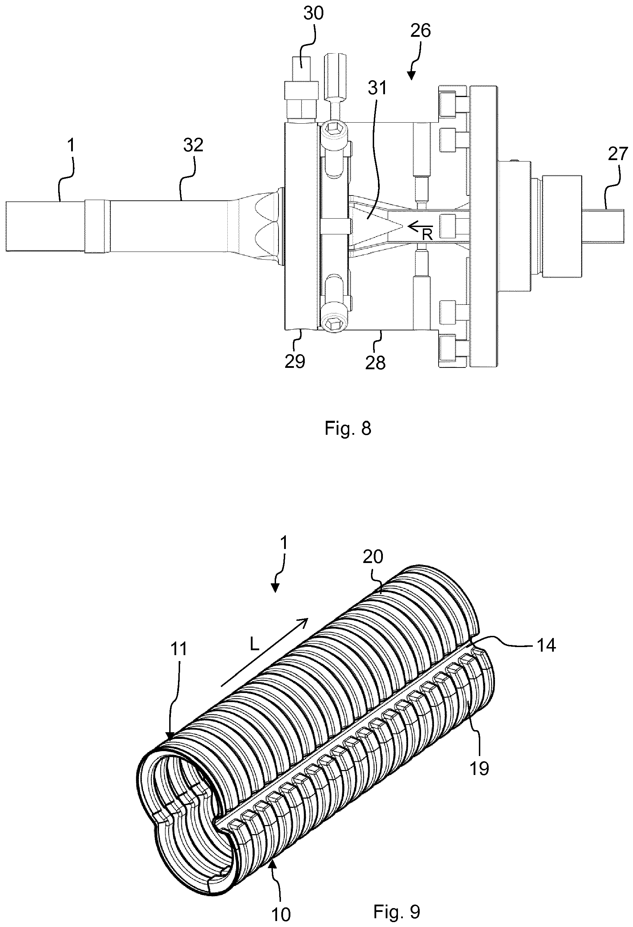

Bei einem in der Fig. 7 schematisch mit Hilfe eines Blockdiagramms gezeigten Verfahren zum Herstellen eines derartigen Wellschlauchs 1 wird der Wellschlauch 1 in einem Schritt S1 mit Hilfe eines in der Fig. 8 in einer schematischen Schnittansicht gezeigten Spritzkopfs 26 durch Zweikomponentenextrusion hergestellt. Der Spritzkopf 26 umfasst einen ersten Anschlussflansch 27, an den ein Hauptextruder oder erster Extruder zum Plastifizieren einer ersten oder harten Komponente anschließbar ist. Die erste Wellschlauchschale 10 sowie die zweite Wellschlauchschale 11 sind aus der ersten Komponente gefertigt. Die erste Komponente ist PA, PE, PP, PTFE oder PVC. Der Anschlussflansch 27 ist an einem Gehäuse 28 des Spritzkopfs 26 angeordnet. Der Spritzkopf 26 umfasst weiterhin einen Plattenverteiler oder eine Verteilerplatte 29, die ebenfalls mit dem Gehäuse 28 verbunden ist. An der Verteilerplatte 29 ist ein zweiter Anschlussflansch 30 angeschlossen. An den zweiten Anschlussflansch 30 ist ein Nebenextruder oder zweiter Extruder zum Plastifizieren einer zweiten oder weichen Komponente anschließbar. Die Lippenabschnitte 17, 18 und/oder der Gelenkabschnitt 14 sind aus der zweiten Komponente gefertigt. Die zweite Komponente ist ein TPE.

In dem Gehäuse 28 ist ferner ein Schmelzeteiler oder sogenannter Torpedo 31 aufgenommen, dessen Querschnitt sich in einer Flussrichtung R der plastifizierten ersten Komponente kontinuierlich aufweitet. In Flussrichtung R dem Torpedo 31 nachgeordnet ist die Verteilerplatte 29 vorgesehen, in der die plastifizierte zweite Komponente der plastifizierten ersten Komponente zugeführt wird. Stromabwärts der Verteilerplatte 29 ist eine Einspritzdüse oder Formdüse 32 angeordnet, die dem Wellschlauch 1 die gewünschte Geometrie gibt. Hierbei weist der Wellschlauch 1 unmittelbar nach der Formdüse 32 zunächst noch keine Rippen 19, 20 auf. Deshalb ist der Formdüse 32 ein in der Fig. 8 nicht gezeigter Korrugator nachgeordnet, der den noch nicht abgekühlten Wellschlauch 1 derart umformt, dass die Rippen 19, 20 gebildet werden.

Die Lippenabschnitte 17, 18 sind stromabwärts der Formdüse 32 zunächst noch stoffschlüssig miteinander verbunden. In einem Schritt S2 werden die materialeinstückig miteinander verbundenen Lippenabschnitte 17, 18 nach oder bei dem Extrudieren in der Längsrichtung L des Wellschlauchs 1 derart geteilt, dass zwei voneinander getrennte Lippenabschnitte 17, 18 gebildet werden. Das Teilen der Lippenabschnitte 17, 18 wird vorzugsweise stromabwärts des Korrugators vorgenommen.

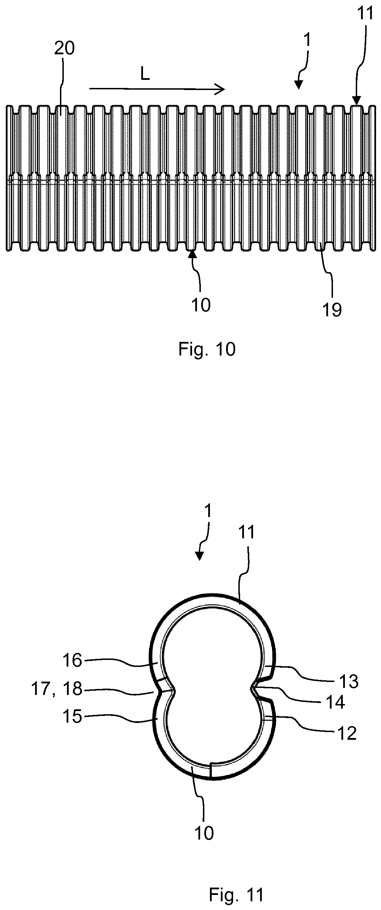

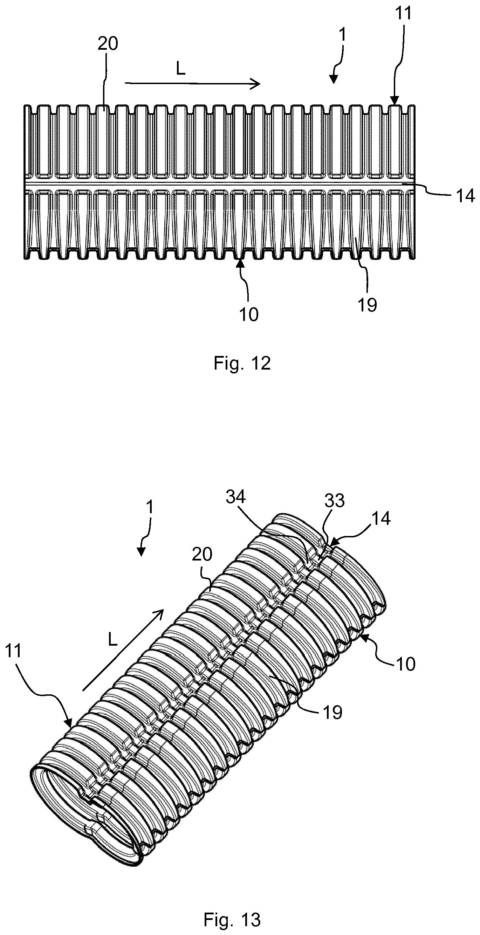

Die Fig. 9 zeigt eine schematische perspektivische Ansicht des Wellschlauchs 1. Die Fig. 10 zeigt eine schematische Seitenansicht des Wellschlauchs 1 mit Blick auf die Lippenabschnitte 17, 18. Die Fig. 11 zeigt eine schematische Vorderansicht des Wellschlauchs 1 und die Fig. 12 zeigt eine weitere schematische Seitenansicht des Wellschlauchs 1 mit Blickrichtung auf den Gelenkabschnitt 14. Die Fig. 9 bis 12 zeigen den Wellschlauch 1 nach dem Schritt S1 also vor dem Teilen der Lippenabschnitte 17, 18.

Wie die Fig. 9, 11 und 12 zeigen, sind die Rippen 19, 20 im Bereich des Gelenkabschnitts 14 unterbrochen, so dass dieser ein Filmscharnier zwischen den Wellschlauchschalen 10, 11 bildet. Wie in der Fig. 12 weiter zu erkennen ist, verjüngen sich die Rippen 19 zumindest im Bereich der Verrasteinrichtung 23, so dass diese von innen in die Rippen 20 einschnappbar sind. Die Lippenabschnitte 17, 18 können im Schritt S2 beispielsweise mit Hilfe einer Schneideinrichtung wie einer Schneide oder einer Laserschneideinrichtung mittig geteilt werden.

Die Fig. 13 zeigt eine schematische perspektivische Ansicht einer weiteren Ausführungsform des Wellschlauchs 1 mit Blickrichtung auf den Gelenkabschnitt 14. Der Wellschlauch 1 gemäß der Fig. 13 unterscheidet sich von der Ausführungsform des Wellschlauchs 1 gemäß der Fig. 1 bis 6 und 9 bis 12 nur dadurch, dass der Gelenkabschnitt 14 nicht als glattes Filmscharnier ausgebildet ist sondern sich abwechselnd angeordnete Wellen oder Rippen 33 und Wellentäler oder Rippentäler 34 umfasst. Die Rippen 33 können als Fortsetzungen der Rippen 19, 20 ausgebildet sein.

### BEZUGSZEICHENLISTE

- 1: Wellschlauch
- 2: Leitung
- 3: Leitung
- 4: Leitung
- 5: Leitung
- 6: Leitung
- 7: Leitung
- 8: Leitung
- 9: Kabelbaum
- 10: Wellschlauchschale
- 11: Wellschlauchschale
- 12: Endabschnitt
- 13: Endabschnitt
- 14: Gelenkabschnitt
- 15: Endabschnitt
- 16: Endabschnitt
- 17: Lippenabschnitt
- 18: Lippenabschnitt
- 19: Rippe
- 20: Rippe
- 21: Rippental
- 22: Rippental
- 23: Verrasteinrichtung
- 24: Rastnase
- 25: Rasthaken
- 26: Spritzkopf
- 27: Anschlussflansch
- 28: Gehäuse
- 29: Verteilerplatte
- 30: Anschlussflansch
- 31: Torpedo
- 32: Formdüse
- 33: Rippe
- 34: Rippental

- A₁₀: Öffnung
- A₁₁: Öffnung
- dₐ₁₉: Durchmesser
- dₐ₂₀: Durchmesser
- dₐ₂₁: Durchmesser
- dₐ₂₂: Durchmesser
- dᵢ₁₉: Durchmesser
- dᵢ₂₀: Durchmesser
- dᵢ₂₁: Durchmesser
- dᵢ₂₂: Durchmesser
- L: Längsrichtung
- M₁: Mittelachse
- M₁₀: Mittelachse
- M₁₁: Mittelachse
- R: Flussrichtung
- r₁: Radiale Richtung
- S1: Schritt
- S2: Schritt
- t₁₀₁: Materialdicke
- t₁₀₂: Materialdicke
- t₁₁₁: Materialdicke
- t₁₁₂: Materialdicke
- α₁₀: Öffnungswinkel
- a₁₁: Öffnungswinkel
- β: Überdeckungswinkel

## Patentansprüche

1. Aufklappbarer Wellschlauch (1) zum Aufnehmen von Leitungen (2 - 8), mit:
einer ersten Wellschlauchschale (10),
einer zweiten Wellschlauchschale (11),
einem Gelenkabschnitt (14), an dem die erste Wellschlauchschale (10) und die zweite Wellschlauchschale (11) jeweils an einem ersten Endabschnitt (12, 13) verschwenkbar miteinander verbunden sind,
einem Lippenabschnitt (17, 18), der an einem zweiten Endabschnitt (15, 16) zumindest einer der Wellschlauchschalen (10, 11) vorgesehen ist, wobei der Lippenabschnitt (17, 18) aus einem anderen Material als die Wellschlauchschalen (10, 11) gefertigt ist, und
einer Verrasteinrichtung (23) zum Verrasten der ersten Wellschlauchschale (10) mit der zweiten Wellschlauchschale (11) beim Verbringen des Wellschlauchs (1) von einem aufgeklappten Zustand in einen zusammengeklappten Zustand desselben.

2. Aufklappbarer Wellschlauch nach Anspruch 1, wobei sowohl an einem zweiten Endabschnitt (15) der ersten Wellschlauchschale (10) als auch an einem zweiten Endabschnitt (16) der zweiten Wellschlauchschale (11) jeweils ein Lippenabschnitt (17, 18) vorgesehen ist.

3. Aufklappbarer Wellschlauch nach Anspruch 1 oder 2, wobei der Lippenabschnitt (17, 18) stoffschlüssig mit dem zweiten Endabschnitt (15, 16) verbunden ist.

4. Aufklappbarer Wellschlauch nach einem der Ansprüche 1 - 3, wobei der Gelenkabschnitt (14) aus einem anderen Material als die Wellschlauchschalen (10, 11) gefertigt ist.

5. Aufklappbarer Wellschlauch nach einem der Ansprüche 1 - 4, wobei der Gelenkabschnitt (14) und der Lippenabschnitt (17, 18) aus demselben Material, insbesondere aus einem thermoplastischen Elastomer, gefertigt sind.

6. Aufklappbarer Wellschlauch nach einem der Ansprüche 1 - 5, wobei der Gelenkabschnitt (14) stoffschlüssig mit der ersten Wellschlauchschale (10) und der zweiten Wellschlauchschale (11) verbunden ist.

7. Aufklappbarer Wellschlauch nach einem der Ansprüche 1 - 6, wobei die erste Wellschlauchschale (10) in einem zusammengeklappten Zustand des aufklappbaren Wellschlauchs (1) zumindest abschnittsweise innerhalb der zweiten Wellschlauchschale (11) angeordnet ist.

8. Aufklappbarer Wellschlauch nach einem der Ansprüche 1 - 7, wobei ein Durchmesser (dₐ₁₉, dᵢ₁₉, dₐ₂₁, dᵢ₂₁) der ersten Wellschlauchschale (10) kleiner als ein Durchmesser (dₐ₂₀, dᵢ₂₀, dₐ₂₂, dᵢ₂₂) der zweiten Wellschlauchschale (11) ist.

9. Aufklappbarer Wellschlauch nach Anspruch 8, wobei der Durchmesser (dₐ₁₉, dᵢ₁₉, dₐ₂₁, dᵢ₂₁) der ersten Wellschlauchschale (10) um 5 bis 15%, bevorzugt um 6 bis 14%, weiter bevorzugt um 7 bis 13%, weiter bevorzugt um 8 bis 12%, weiter bevorzugt um 9 bis 11%, weiter bevorzugt um 10% kleiner als der Durchmesser (dₐ₂₀, dᵢ₂₀, dₐ₂₂, dᵢ₂₂) der zweiten Wellschlauchschale (11) ist.

10. Aufklappbarer Wellschlauch nach einem der Ansprüche 1 - 9, wobei beim Verbringen des Wellschlauchs (1) von einem aufgeklappten Zustand in einen zusammengeklappten Zustand desselben die erste Wellschlauchschale (10) und/oder die zweite Wellschlauchschale (11) federelastisch verformbar sind.

11. Aufklappbarer Wellschlauch nach einem der Ansprüche 1 - 10, wobei die erste Wellschlauchschale (10) und die zweite Wellschlauchschale (11) jeweils umlaufende Rippen (19, 20) aufweisen, wobei die Verrasteinrichtung (23) an den Rippen (19) der ersten Wellschlauchschale (10) vorgesehene Rastnasen (24) und an den Rippen (20) der zweiten Wellschlauchschale (11) vorgesehene Rasthaken (25) umfasst, wobei die Rastnasen (24) dazu eingerichtet sind, formschlüssig in die Rasthaken (25) einzugreifen und/oder wobei die Rastnasen (24) dazu eingerichtet sind, in einer radialen Richtung (r₁) des aufklappbaren Wellschlauchs (1) formschlüssig in die Rasthaken (25) einzugreifen.

12. Kabelbaum (9) für den Automobilbereich mit einem oder mehreren elektrischen Kabeln (2 - 8) und einem aufklappbaren Wellschlauch (1) nach einem der Ansprüche 1 - 11, wobei das eine oder die elektrischen mehreren Kabel (2 - 8) über eine Länge des aufklappbaren Wellschlauchs (1) in diesem geführt sind.

13. Verfahren zum Herstellen eines aufklappbaren Wellschlauchs (1) nach einem der Ansprüche 1 - 11, wobei der aufklappbare Wellschlauch (1) durch Zweikomponentenextrusion hergestellt wird und wobei die erste Wellschlauchschale (10) sowie die zweite Wellschlauchschale (11) mit einer ersten Komponente und der Gelenkabschnitt (14) sowie der Lippenabschnitt (17, 18) mit einer zweiten Komponente extrudiert (S1) werden, wobei der aufklappbare Wellschlauch eine Verrasteinrichtung (23) zum Verrasten der ersten Wellschlauchschale (10) mit der zweiten Wellschlauchschale (11) beim Verbringen des Wellschlauchs (1) von einem aufgeklappten Zustand in einen zusammengeklappten Zustand desselben aufweist.

14. Verfahren nach Anspruch 13, wobei der Lippenabschnitt (17, 18) nach oder bei dem Extrudieren in einer Längsrichtung (L) des aufklappbaren Wellschlauchs (1) geteilt (S2) wird.

## Claims

1. Openable corrugated hose (1) for accommodating cables (2 - 8), comprising:
a first corrugated hose shell (10),
a second corrugated hose shell (11),
a joint section (14), at which the first corrugated hose shell (10) and the second corrugated hose shell (11) are each connected to one another pivotably at a first end section (12, 13), and
a lip section (17, 18), which is provided on a second end section (15, 16) of at least one of the corrugated hose shells (10, 11), wherein the lip section (17, 18) is manufactured from a different material than the corrugated hose shells (10, 11), and
a latching device (23) for latching the first corrugated hose shell (10) with the second corrugated hose shell (11) when the corrugated hose (1) is transferred from an opened state to a closed state thereof.

2. Openable corrugated hose according to claim 1, wherein a lip section (17, 18) is provided both on a second end section (15) of the first corrugated hose shell (10) and on a second end section (16) of the second corrugated hose shell (11), respectively.

3. Openable corrugated hose according to claim 1 or 2, wherein the lip section (17, 18) is connected materially to the second end section (15, 16).

4. Openable corrugated hose according to one of claims 1 to 3, wherein the joint section (14) is manufactured from a different material than the corrugated hose shells (10, 11).

5. Openable corrugated hose according to one of claims 1 to 4, wherein the joint section (14) and the lip section (17, 18) are manufactured from the same material, in particular from a thermoplastic elastomer.

6. Openable corrugated hose according to one of claims 1 to 5, wherein the joint section (14) is connected materially to the first corrugated hose shell (10) and the second corrugated hose shell (11).

7. Openable corrugated hose according to one of claims 1 to 6, wherein the first corrugated hose shell (10) is arranged at least partially within the second corrugated hose shell (11) in a closed state of the openable corrugated hose (1).

8. Openable corrugated hose according to one of claims 1 to 7, wherein a diameter (dₐ₁₉, dᵢ₁₉, dₐ₂₁, dᵢ₂₁) of the first corrugated hose shell (10) is smaller than a diameter (dₐ₂₀, dᵢ₂₀, dₐ₂₂, dᵢ₂₂) of the second corrugated hose shell (11).

9. Openable corrugated hose according to claim 8, wherein the diameter (dₐ₁₉, dᵢ₁₉, dₐ₂₁, dᵢ₂₁) of the first corrugated hose shell (10) is 5 to 15%, preferably 6 to 14%, more preferably 7 to 13%, more preferably 8 to 12%, more preferably 9 to 11%, more preferably 10% smaller than the diameter (dₐ₂₀, dᵢ₂₀, dₐ₂₂, dᵢ₂₂) of the second corrugated hose shell (11).

10. Openable corrugated hose according to one of claims 1 to 9, wherein one or both of the first corrugated hose shell (10) and the second corrugated hose shell (11) can be deformed resiliently as the corrugated hose (1) is transferred from an opened state to a closed state.

11. Openable corrugated hose according to one of claims 1 to 10, wherein the first corrugated hose shell (10) and the second corrugated hose shell (11) each have circumferential ribs (19, 20), wherein the latching device (23) has latching noses (24) provided on the ribs (19) of the first corrugated hose shell (10) and latching hooks (25) provided on the ribs (20) of the second corrugated hose shell (11), wherein the latching noses (24) are configured to engage positively in the latching hooks (25) and/or wherein the latching noses (24) are configured to engage positively in the latching hooks (25) in a radial direction (r₁) of the openable corrugated hose (1).

12. Cable harness (9) for the automotive sector, comprising one or more electric cables (2 - 8) and an openable corrugated hose (1) according to one of claims 1 to 11, wherein the one or more electric cables (2 - 8) are guided in the openable corrugated hose (1) over a length thereof.

13. Method for producing the openable corrugated hose (1) according to one of claims 1 to 11, wherein the openable corrugated hose (1) is produced by two-component extrusion, and wherein the first corrugated hose shell (10) and the second corrugated hose shell (11) are extruded with a first component and the joint section (14) and the lip section (17, 18) are extruded (S1) with a second component, wherein the openable corrugated hose comprises a latching device (23) for latching the first corrugated hose shell (10) with the second corrugated hose shell (11) when transferring the corrugated hose (1) from an opened state to a closed state thereof.

14. Method according to claim 13, wherein the lip section (17, 18) is divided (S2) in a longitudinal direction (L) of the openable corrugated hose (1) during or after extrusion.

## Revendications

1. Tuyau annelé pouvant s'ouvrir (1) destiné à recevoir des câbles (2-8), comprenant :
une première enveloppe (10) de tuyau annelé,
une seconde enveloppe (11) de tuyau annelé,
une section de jonction (14), au niveau de laquelle la première enveloppe (10) de tuyau annelé et la seconde enveloppe (11) de tuyau annelé sont individuellement reliées l'une à l'autre de manière pivotante au niveau d'une première section d'extrémité (12, 13), et
une section de lèvre (17, 18), qui est prévue sur une seconde section d'extrémité (15, 16) d'au moins l'une des deux enveloppes (10, 11) de tuyau annelé, dans lequel la section de lèvre (17, 18) est fabriquée à partir d'un matériau différent de celui des enveloppes (10, 11) de tuyau annelé, et
un dispositif de verrouillage (23) destiné à verrouiller la première enveloppe (10) de tuyau annelé à la seconde enveloppe (11) de tuyau annelé lorsque le tuyau (1) fait l'objet d'un transfert de son état ouvert à son état fermé.

2. Tuyau annelé pouvant s'ouvrir selon la revendication 1, dans lequel une section de lèvre (17, 18) est prévue à la fois respectivement sur une seconde section d'extrémité (15) de la première enveloppe (10) de tuyau annelé et sur une seconde section d'extrémité (16) de la seconde enveloppe (11) de tuyau annelé.

3. Tuyau annelé pouvant s'ouvrir selon la revendication 1 ou la revendication 2, dans lequel la section de lèvre (17, 18) est reliée matériellement à la seconde section d'extrémité (15, 16).

4. Tuyau annelé pouvant s'ouvrir selon l'une des revendications 1 à 3, dans lequel la section de jonction (14) est fabriquée à partir d'un matériau différent de celui des enveloppes (10, 11) de tuyau annelé.

5. Tuyau annelé pouvant s'ouvrir selon l'une des revendications 1 à 4, dans lequel la section de jonction (14) et la section de lèvre (17, 18) sont fabriquées à partir du même matériau, en particulier à partir d'un élastomère thermoplastique.

6. Tuyau annelé pouvant s'ouvrir selon l'une des revendications 1 à 5, dans lequel la section de jonction (14) est reliée matériellement à la première enveloppe (10) de tuyau annelé et à la seconde enveloppe (11) de tuyau annelé.

7. Tuyau annelé pouvant s'ouvrir selon l'une des revendications 1 à 6, dans lequel la première enveloppe (10) de tuyau annelé est disposée au moins partiellement à l'intérieur de la seconde enveloppe (11) de tuyau annelé dans un état fermé du tuyau annelé pouvant s'ouvrir (1).

8. Tuyau annelé pouvant s'ouvrir selon l'une des revendications 1 à 7, dans lequel un diamètre (dₐ₁₉, dᵢ₁₉, dₐ₂₁, dᵢ₂₁) de la première enveloppe (10) de tuyau annelé est inférieur à un diamètre (dₐ₂₀, dᵢ₂₀, dₐ₂₂, dᵢ₂₂) de la seconde enveloppe (11) de tuyau annelé.

9. Tuyau annelé pouvant s'ouvrir selon la revendication 8, dans lequel le diamètre (dₐ₁₉, dᵢ₁₉, dₐ₂₁, dᵢ₂₁) de la première enveloppe (10) de tuyau annelé est inférieur de 5 à 15 %, idéalement de 6 à 14 %, plus idéalement de 7 à 13 %, plus idéalement de 8 à 12 %, plus idéalement de 9 à 11 %, plus idéalement de 10 % au diamètre de la seconde enveloppe (11) de tuyau annelé.

10. Tuyau annelé pouvant s'ouvrir selon l'une des revendications 1 à 9, dans lequel une enveloppe ou les deux enveloppes de la première enveloppe (10) de tuyau annelé et de la seconde enveloppe (11) de tuyau annelé peuvent se déformer élastiquement lorsque le tuyau (1) fait l'objet d'un transfert d'un état ouvert à un état fermé.

11. Tuyau annelé pouvant s'ouvrir selon l'une des revendications 1 à 10, dans lequel la première enveloppe (10) de tuyau annelé et la seconde enveloppe (11) de tuyau annelé comportent individuellement des nervures circonférentielles (10, 20), dans lequel le dispositif de verrouillage (23) comporte des nez de verrouillage (24) prévus sur les nervures (19) de la première enveloppe (10) de tuyau annelé et des crochets de verrouillage (25) prévus sur les nervures (20) de la seconde enveloppe (11) de tuyau annelé, dans lequel les nez de verrouillage (24) sont conçus pour une coopération positive avec les crochets de verrouillage (25) et/ou dans lequel les nez de verrouillage (24) sont conçus pour une coopération positive avec les crochets de verrouillage (25) dans une direction radiale (r₁) du tuyau annelé pouvant s'ouvrir (1).

12. Faisceau de câbles (9) destiné au secteur automobile, comprenant un ou plusieurs câbles électriques (2-8) et un tuyau annelé pouvant s'ouvrir (1) selon l'une des revendications 1 à 11, dans lequel le ou les câbles électriques (2-8) sont guidés dans le tuyau annelé pouvant s'ouvrir (1) sur la longueur de ce dernier.

13. Procédé de production du tuyau annelé pouvant s'ouvrir (1) selon l'une des revendications 1 à 11, dans lequel le tuyau annelé pouvant s'ouvrir (1) est produit par une extrusion de deux constituants, et dans lequel la première enveloppe (10) de tuyau annelé et la seconde enveloppe (11) de tuyau annelé sont extrudées avec un premier constituant et la section de jonction (14) et la section de lèvre (17, 18) sont extrudées (S1) avec un second constituant, dans lequel le tuyau annelé pouvant s'ouvrir comprend un dispositif de verrouillage (23) destiné à verrouiller la première enveloppe (10) de tuyau annelé à la seconde enveloppe (11) de tuyau annelé lors du transfert du tuyau (1) de son état ouvert à son état fermé.

14. Procédé selon la revendication 13, dans lequel la section de lèvre (17, 18) est divisée (S2) dans une direction longitudinale (L) du tuyau annelé pouvant s'ouvrir (1) pendant ou après l'extrusion.
